# EUROPÄISCHE PATENTSCHRIFT

(11) **EP 2 255 109 B1**
(45) Veröffentlichungstag und Bekanntmachung des Hinweises auf die Patenterteilung: **12.09.2012**
(21) Anmeldenummer: 09724185.5
(22) Anmeldetag: 26.03.2009
(51) Int. Cl.: F16H 63/48, B60T 1/00, F16C 1/22

(54) **PARKSPERRENSYSTEM FÜR EIN AUTOMATIKGETRIEBE**
PARKING LOCK SYSTEM FOR AN AUTOMATIC TRANSMISSION
SYSTÈME DE BLOCAGE DE STATIONNEMENT POUR UNE BOÎTE DE VITESSES AUTOMATIQUE

(30) Priorität: 27.03.2008 DE 102008000857
(43) Veröffentlichungstag der Anmeldung: 01.12.2010
(73) Patentinhaber: ZF Friedrichshafen AG, 88038 Friedrichshafen (DE); Bayerische Motoren Werke AG, 80809 München (DE)
(72) Erfinder: VÖLZ, Michael, 49356 Diepholz (DE); RAKE, Ludger, 49356 Diepholz (DE); GIEFER, Andreas, 49448 Lemförde (DE); ROSENTRETER, Sascha, 32339 Espelkamp (DE); KÖNIG, Roland, 82392 Habach (DE)
(86) Internationale Anmeldenummer: PCT/DE2009/050011
(87) Internationale Veröffentlichungsnummer: WO 2009/118004

(56) Entgegenhaltungen:
- WO-A-2008/022617
- DE-A1- 10 157 460
- DE-A1- 19 641 858
- DE-A1-102005 002 446
- US-A- 6 124 789

## Beschreibung

Die Erfindung betrifft eine Parksperrensystem für ein Automatikgetriebe eines Kraftfahrzeuges, wobei das Automatikgetriebe einen Aktuator aufweist, welcher ein Sperrelement im Automatikgetriebe auslegen kann, das Sperrelement durch Federkraft in verriegelter Stellung gehalten wird, und eine Verriegelungsvorrichtung vorgesehen ist, die über ein Stellglied mit dem Sperrelement verbunden ist und einen Kniehebel aufweist, welcher das Stellglied fixieren kann, so dass ein Einlegen des Sperrelementes im Automatikgetriebe verhindert werden kann.

Solche Parksperrensysteme werden in Verbindung mit Automatikgetrieben von Kraftfahrzeugen benötigt. Mit diesen wird im Falle eines Systemausfalls verhindert, dass ein im Automatikgetriebe vorhandenes Sperrelement in ein Getrieberitzel eingreift, damit keine ungewollte Blockade des Getriebes - beispielsweise bei einem Systemausfall während der Fahrt - stattfindet. Gleichzeitig ist die Funktion des Sperrelementes jedoch so ausgelegt, dass es - ohne besondere Gegenmaßnahmen - mit Federkraft in ein Getrieberitzel eingreift, damit ein ungewolltes Fortbewegen des Fahrzeuges - auch bei einem Systemausfall - bei eingelegter Parksperre verhindert wird. Würde ein solches Sperrelement während der Fahrt, also während der Automatikhebel nicht auf "P" steht, plötzlich selbsttätig in das Getriebe eingreifen, so könnte es zu Beschädigungen im Bereich des Getriebes führen. Gleichzeitig könnte auch die Fahrsicherheit stark negativ beeinflusst werden.

Im Stand der Technik ist eine Vielzahl von Parksperrensystemen mit Verriegelungsvorrichtungen bekannt. Es wird insbesondere auf die Offenlegungsschrift DE 10 2005 002 446 A1, die die Merkmalen des Oberbegriffs von Anspruch 1 offenbart, hingewiesen, in der eine Parksperre eines Automatikgetriebes für ein Kraftfahrtzeug offenbart wird, welches mit einem über ein Stellantrieb betätigbaren und über eine Federkraft in Verriegelungsstellung beaufschlagten Sperrglied mit einer neben dem Stellantrieb vorgesehenen auf das Sperrglied mittels eines Sperrelementes wirkenden Haltevorrichtung über die das Sperrglied unabhängig von dem Stellantrieb in seiner Entriegelungsstellung haltbar ist, wobei die Haltevorrichtung einen Kniehebel mit einem ersten Kniehebelteil, einem Kniehebelgelenk, und einem zweiten Kniehebelteil aufweist, der Kniehebel in der Entriegelungsstellung des Sperrgliedes mittels eines Sperrelementes in eine nahezu gestreckten Stellung verriegelt ist.

Grundsätzlich geht eine derartige Ausführung einer Parksperre, die auch dem Oberbegriff des vorliegenden Patentanspruches entspricht, in die gewünschte Richtung, da aufgrund der Verwendung des Kniehebels es möglich ist, durch Anwendung relativ geringer Kräfte eine Verriegelung beziehungsweise Entriegelung der Parksperre zu erreichen.

Die WO 2008/022617 A und die DE 101 57 460 A1 offenbaren ähnliche Parksperrensysteme.

Problematisch ist jedoch bei der im Stand der Technik gezeigten Verriegelungsvorrichtung für die Parksperre, dass der Kniehebel sehr exakt eingestellt werden muss, da kaum Toleranzen in der dargestellten Ausführungsform möglich sind, so dass für die Verwirklichung dieser Ausführungsform ein entsprechend hoher Einstellungsaufwand beim Einbau des Parksperrensystems, insbesondere der Verriegelungsvorrichtung, abgestimmt auf die jeweils individuell vorliegende Einbausituation, notwendig ist.

Es ist daher Aufgabe der Erfindung, eine Parksperrensystem für ein Automatikgetriebe eines Kraftfahrzeuges mit einer Verriegelungsvorrichtung zu finden, wobei die Verriegelungsvorrichtung ausgelegt sein sollte, dass größere Toleranzen bei der Einstellung nach dem Einbau des Systems möglich sind beziehungsweise zusätzliche Einstellungsarbeiten vollständig entfallen.

Die Aufgabe wird durch die Merkmale der unabhängigen Ansprüche gelöst. Vorteilhafte Ausgestaltungen sind in den Unteransprüchen und der Beschreibung dargestellt.

Die Erfinder haben erkannt, dass ein wesentliches Problem der Verriegelungsvorrichtung einer Parksperre gemäß DE 10 2005 002 446 A1 darin liegt, dass der dort gezeigte Kniehebel durch einen beweglichen Anschlag aus der nahezu gestreckten Situation gegen Einknicken gehindert wird. In dieser gestreckten Situation befindet sich jedoch der Kniehebel auf der Seite, auf der er letztendlich auch einknickt. Eine wesentlich sicherere Position des Kniehebels ist dann bewirkt, wenn der Kniehebel auf die gegenüberliegende Seite, also über seinen Druckpunkt hinweg, überstreckt wird, so dass es wiederum notwendig ist, eine minimale Kraft aufzuwenden, um den Kniehebel aus dieser überstreckten Situation wieder in eine abknickbare Stellung zu bringen. Hierzu ist es notwendig, auf der überstreckten Seite des Kniehebels einen festen Anschlag vorzusehen, der ein weiteres Überstrecken und damit wiederum Einknicken des Kniehebels auf der falschen Seite verhindert.

Eine weitere Modifikation, welches die Einstelltoleranzen der Verriegelungsvorrichtung der Parksperre drastisch steigert, liegt darin, dass das Stellglied, welches durch den Kniehebel fixiert wird, nicht starr am Kniehebelende befestigt wird, sondern federbelastet über einen gewissen Toleranzweg hinweg sich entlang des Endes des Kniehebels bewegen kann, wobei selbstverständlich zu beiden Seiten des Toleranzweges ein fester Anschlag vorgesehen sein sollte.

Entsprechend dieser Erkenntnis schlagen die Erfinder vor, eine an sich bekanntes Parksperrensystem für ein Automatikgetriebe eines Kraftfahrzeuges gemäß dem Oberbegriff des Patentanspruches 1 dahingehend zu verbessern, dass das Stellglied federbelastet mit einem Ende des Kniehebels deraut verbunden ist, dass das Stellglied in einem Gleitlager an einem Ende des Kniehebels über einen vorbestimmten Toleranzweg hinweg entlang des Endes des Knichebels bewegbar ist, wobei zu beiden des vorbestimmten Toleranzweges ein fester Anschlag vorgesehen ist und wobei wobei zwischen dem ersten festen Anschlag am Stellglied und dem Gleitlager auf einer Seite des Stellgliedes eine erstes Federelement angeordnet ist, und auf der anderen Seite des Gleitlagers am Stellglied der zweite feste Anschlag angeordnet ist.

Durch diese Ausführung ergibt sich ein besonders großer Toleranzbereich für die Einstellung des Kniehebels, so dass gesonderte Einstellmaßnahmen je nach Einbausituation praktisch unterbleiben können.

Die Erfinder schlagen weiterhin vor, dass an dem Kniehebel ein zweites Federelement angreift, dessen Federkraft in Richtung Überstreckung des Kniehebels wirkt. Durch diese Maßnahme wird der Kniehebel, sobald er in eine entlastete Situation kommt, automatisch in die überstreckte fixierte Position geleitet und auch durch diese Federkraft in dieser Position gehalten, so dass eine sichere Fixierung des Kniehebels und damit des Stellgliedes vorliegt. Bei dieser Ausführung ist es günstig und einfach zu verwirklichen, wenn das zweite Federelement an der mittleren Achse zwischen zwei Hebelarmen des Kniehebels angeordnet ist. Grundsätzlich besteht jedoch auch die Möglichkeit, dieses Stellglied an einer der beiden äußeren Achsen angreifen zu lassen oder auch mit Hilfe eines externen Federelementes auf den Kniehebel einzuwirken, so dass durch dessen Federkraft der Kniehebel in Richtung Überstreckung ausgelenkt wird.

Eine weitere vorteilhafte Ausbildung der erfindungsgemäßen Parksperre sieht vor, dass der Kniehebel in einem überstreckten Zustand das Stellglied fixiert, wobei ein fester Gegenhalter auf der überstreckten Seite des Kniehebels angebracht ist.

Eine weitere bevorzugte Ausführungsform der Parksperre und dessen Verriegelungsvorrichtung sieht vor, dass diese mit einem fernbetätigbaren Aktuator ausgestattet ist, welcher am Kniehebel angreifen kann und diesen aus der überstreckten und fixierten Lage in eine bewegliche Lage überführen kann. Dies kann beispielsweise ein Elektromagnet sein, welcher einen Stößel bewegt, der direkt an einen der Hebel des Kniehebels angreift. Alternativ besteht jedoch auch die Möglichkeit, einen Elektromagneten als fernbetätigten Aktuator alleine zu verwenden, der gegen einen am Kniehebel befestigten Permanentmagneten wirkt. Dabei wird durch das Einschalten des Elektromagnets eine abstoßende Wirkung gegenüber dem Permanentmagneten erzielt, welche dafür sorgt, dass dieser den kleinen Weg über den Totpunkt hinweg aufgrund abstoßender magnetischer Kräfte ausführt.

Das Stellglied kann beispielsweise ein Bowdenzug sein, oder auch ein Gestänge, mit dem das eingangs erwähnte Sperrelement des Automatikgetriebes verbunden ist.

Weiterhin ist es vorteilhaft, wenn die Verriegelungsvorrichtung des Parksperrensystems so ausgebildet ist, dass das Ende des Kniehebels, an dem das Stellglied angreift, in einer Führung gelagert wird. Hierdurch entstehen keine seitlichen Belastungen auf das Stellglied, so dass eine eindeutig definierte Linearbewegung des Stellgliedes beziehungsweise des Bowdenzuges durch das Einknicken beziehungsweise Strecken des Kniehebels in Richtung der Bowdenzug-Erstreckung erfolgt. Um gegebenenfalls eine gewünschte Entriegelung der zuvor beschriebenen Verriegelungsvorrichtung der Parksperre zu ermöglichen, also um ein Einlegen der Parksperre nach einem Ausfall der Systeme zu ermöglichen, kann weiterhin an einem der Hebelarme des Kniehebels ein Angriffspunkt für ein Werkzeug vorgesehen werden, womit der Kniehebel manuell aus der Überstreckungslage oder in die Überstreckungslage gebracht werden kann. Ein solcher Angriffspunkt kann beispielsweise eine Einsteckhülse für ein Werkzeug sein, in die das Werkzeug, beispielsweise ein Schraubendreher, eingesteckt wird, so dass mit Hilfe von Bordwerkzeug auch eine manuelle Entriegelung der Parksperre und damit eine Einlegung der Parksperre möglich ist, um das Fahrzeug gegen ein ungewünschtes Fortrollen zu sichern. Umgekehrt kann auch eine manuelle Verriegelung vorgenommen werden.

Vorteilhaft kann die Verriegelungsvorrichtung unmittelbar an einer Schaltvorrichtung befestigt werden. Hierdurch kann auf einfache Weise die Verriegelungsvorrichtung des Parksperrensystems mit dem Einbau der Schaltvorrichtung kombiniert werden und es sind keine zusätzlichen Arbeitsschritte beim Einbau der Schaltvorrichtung notwendig.

Zum Rahmen der Erfindung zählt auch eine Schaltvorrichtung für ein Automatikgetriebe, welche das zuvor beschriebene Parksperrensystem aufweist, beziehungsweise ein Automatikgetriebe, welches ebenfalls dieses Parksperrensystem aufweist.

Nachfolgend wird die Erfindung anhand der Zeichnungen und einem Ausführungsbeispiel näher erläutert. Es stellen dar:
- FIG 1:: Seitenansicht für eine Verriegelungsvorrichtung eines Parksperrensystems;
- FIG 2:: Längsschnitt der Verriegelungsvorrichtung mit Kniehebel in leicht überstreckter Position und Bowdenzug in Normalposition;
- FIG 3:: Verriegelungsvorrichtung im Längsschnitt mit Kniehebel in leicht überstreckter Situation und Bowdenzug in einer Überhub-Position;
- FIG 4:: Draufsicht auf die Verriegelungsvorrichtung aus Figur 1;
- FIG 5:: Seitenansicht der Verriegelungsvorrichtung entsprechend Figur 1, jedoch mit Kniehebel in abgewinkelter Position;
- FIG 6:: Verriegelungsvorrichtung aus Figur 5 im Längsschnitt;
- FIG 7:: Schaltvorrichtung mit angeflanschter Verriegelungsvorrichtung in der Seitenansicht, Kniehebel in leicht überstreckter Situation;
- FIG 8:: Schaltvorrichtung mit Entriegelungsvorrichtung entsprechend Figur 7 jedoch mit Kniehebel in abgewinkelter Position.

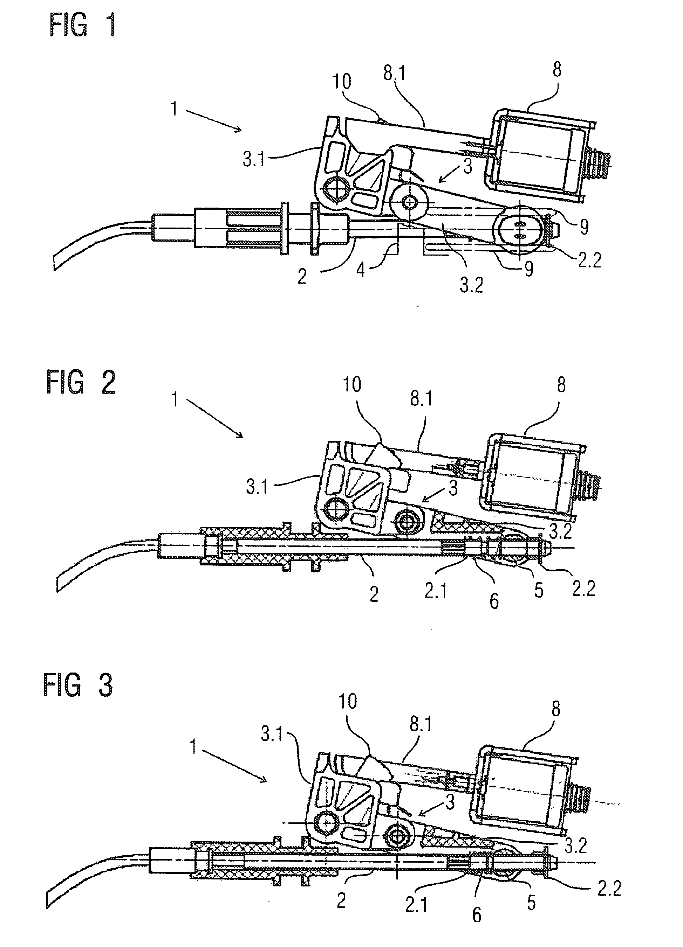

Die Figur 1 zeigt eine erfindungsgemäße Verriegelungsvorrichtung 1 eines Parksperrensystems eines Automatikgetriebes für ein Kraftfahrzeug in einer Seitenansicht. Es ist ein Bowdenzug 2 gezeigt, der unmittelbar mit der Positionierung eines Sperrelementes des Parksperrensystems an einem Automatikgetriebe eines Kraftfahrzeuges verbunden ist und sich synchron mit der Positionierung dieses Sperrelementes in Längsrichtung bewegt. Am Ende dieses Bowdenzuges 2 ist ein Kniehebel 3 befestigt, der aus einem ersten gebundenen Hebelarm 3.1 und einem zweiten freien Hebelarm 3.2 besteht, wobei der erste gebundene Hebelarm 3.1 auf einer Seite an einer gebundenen Achse drehbar fixiert ist, während die andere Seite über eine sich frei bewegende Achse mit dem zweiten freien Hebelarm 3.2 verbunden ist. Der zweite freie Hebelarm 3.2 ist am Ende des Bowdenzuges 2 drehbar befestigt.

In der Figur 2 befindet sich der Kniehebel 3 kurz vor der maximal gestreckten Position, wobei eine Überstreckung dazu führt, dass der Kniehebel gegen einen festen Gegenhalter 4 läuft und in dieser Position verharrt. Aus dieser Position heraus genügen geringe Kräfte, um den Hebelarm wieder in eine geknickte Situation zu bewegen. Diese geringen Kräfte, die zum Entspannen des Kniehebels 3 notwendig sind, können hier beispielsweise durch einen Elektromagneten 8 aufgebracht werden, der mit Hilfe eines Stößels 8.1 am gebundenen Hebelarm 3.1 angreift und den Kniehebel 3 von der leicht überstreckten Situation wieder in eine geknickte Situation bewegt. Um eine seitliche Belastung des Bowdenzuges 2 zu verhindern und durch den Kniehebel 3 eventuell entstehende Querkräfte abzufangen, wird das Ende des Bowdenzuges in einer Führung 9 in Längsrichtung des Bowdenzuges 2 geführt.

Die Figur 2 zeigt die Verriegelungsvorrichtung 1 aus Figur 1, jedoch im Längsschnitt. Auch hier ist der Bowdenzug 2 zu erkennen, der am freien Ende 3.2 des Kniehebels 3 angreift. Aufgrund der Schnittdarstellung ist die Befestigungssituation des Bowdenzuges 2 am Ende des Kniehebels 3 besonders gut zu erkennen. Um problemlos Fertigungstoleranzen oder sonstige Toleranzen beim Einbau und der Positionierung der Verriegelungsvorrichtung ausgleichen zu können, ist eine besondere Befestigungsart des Bowdenzuges 2 am Kniehebel 3 gewählt worden. Der Bowdenzug 2 verläuft in einer als Gleitlager 5 ausgebildeten endständigen Achse. Der Bowdenzug 2 besitzt auf der linken Seite zunächst einen ersten Anschlag 2.1, gegen den eine Spiralfeder 6 drückt, die ihrerseits wiederum gegen das Gleitlager 5 abgestützt ist. Auf der anderen Seite des Gleitlagers 5 befindet sich ein zweiter Anschlag 2.2, der ein Herausrutschen des Bowdenzuges 2 aus dem Gleitlager 5 verhindert. Auf diese Weise kann der Bowdenzug 2 relativ zum Gleitlager 5 und somit relativ zum Kniehebel in eine Überhub-Position geführt werden, sobald der Hub des Bowdenzuges 2 größer wird, als die maximale Streckung des Kniehebels 3 es erlaubt.

Eine solche Überhub-Position ist in der Figur 3 dargestellt. Die Figur 3 zeigt den gleichen Längsschnitt wie Figur 2 durch die Verriegelungsvorrichtung, wobei lediglich der Bowdenzug 2 nach rechts weiter ausgefahren ist, also einen Überhub aufweist, als es die Streckung des Kniehebels erlaubt. Dieser Überhub wird durch die Feder 6 aufgefangen, so dass keine Schädigungen an der Verriegelungsvorrichtung oder am Sperrglied im Automatikgetriebe entstehen können.

Durch diese Ausführungsweise des Kniehebels 3 mit einem festen Gegenhalter auf der überstreckten Seite des Kniehebels ergibt sich einerseits eine sehr sichere Halterung des Kniehebels auch bei Erschütterungen des Fahrzeuges und gleichzeitig werden hier durch diese federbelastete Anbringung des Bowdenzuges am Ende des Kniehebels Systemtoleranzen in Getriebe, Bowdenzug- und Parksperren-Haltemechanismus problemlos eliminiert.

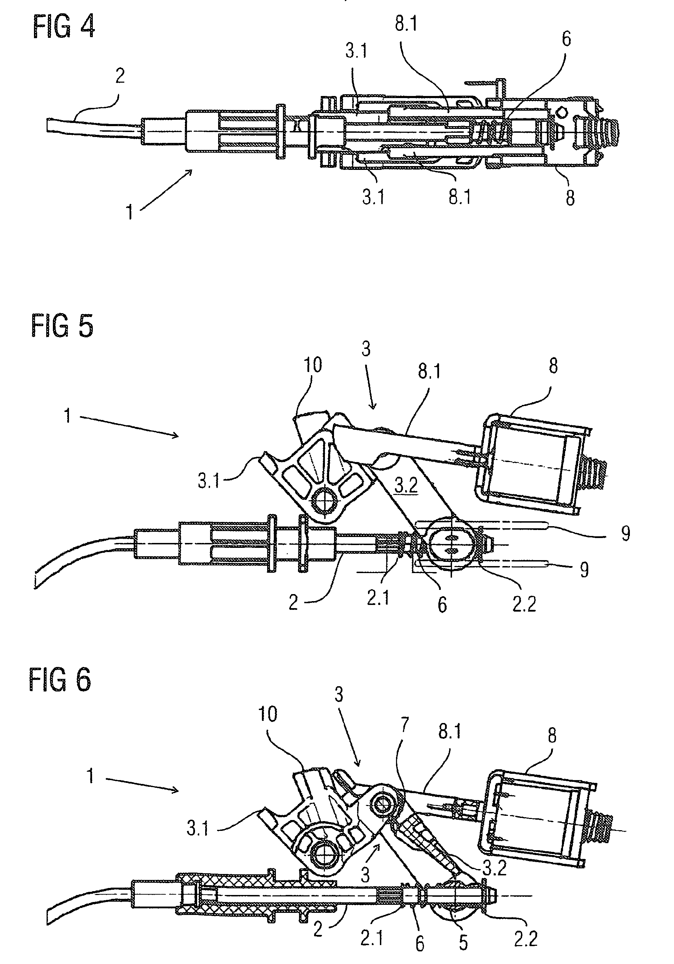

Die Figur 4 zeigt den Verriegelungsvorrichtung 1 aus den Figuren 1 bis 3 in einer Draufsicht. Hier ist von oben der Elektromagnet 8 mit dem gabelartig ausgebildeten Stößel 8.1 zu erkennen, der beim Ausfahren gegen den gebundenen Hebelarm 3.1 des Kniehebels drückt und diesen von der fixierten überstreckten Position in eine geknickte Position überführen kann.

Die Figuren 5 und 6 zeigen die Verriegelungsvorrichtung 1 nochmals in einer Seitenansicht (Figur 5) und einem Längsschnitt (Figur 6), wobei der Kniehebel 3 in geknickter Position dargestellt wird. Hierbei ist der Bowdenzug 2 nach links verschoben, so dass der Kniehebel 3 mit den beiden Hebelarmen 3.1 und 3.2 eingeknickt wird, wobei der Anschlag 2.2 für ein Mitnehmen des zweiten Hebelarms 3.2 durch den Bowdenzug sorgt. In der Figur 6 ist eine Schenkelfeder 7 zu erkennen, welche derart an der mittleren Achse des Kniehebels angebracht ist, dass die beiden Hebelarme 3.1 und 3.2 durch die Federkraft der Schenkelfeder in Richtung einer überstreckten Position geführt werden.

In den Figuren 1, 2, 3, 5 und 6 ist zusätzlich am ersten gebundenen Hebelarm 3.1 eine Hülse 10 erkennbar, in welche beispielsweise ein Schraubendreher oder ein sonstiges Bordwerkzeug, gegebenenfalls auch ein spezielles Bordwerkzeug, gesteckt werden kann, damit bei Ausfall aller Systeme, insbesondere des Elektromagneten 8, durch einfache manuelle Manipulation entweder eine Überstreckung des Kniehebels 3 herbeigeführt werden kann, wodurch das Sperrglied im Automatikgetriebe ausgelegt wird und eine Bewegung des Fahrzeuges möglich wird. Andererseits kann auch durch eine entsprechende Manipulation mit Bordwerkzeug der sich in überstreckter Position befindliche Kniehebel in abgeknickte Position bewegt werden, so dass ein Einlegen der Parksperre erlaubt wird.

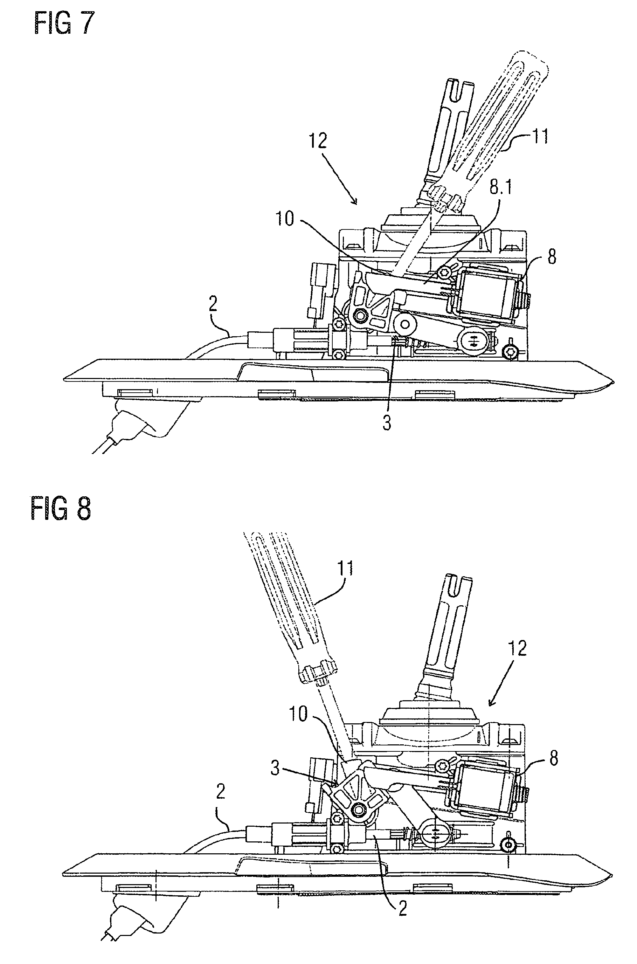

Die Figuren 7 und 8 zeigen eine beispielhafte Einbauposition der zuvor dargestellten Verriegelungsvorrichtung an einer Schaltvorrichtung 12 in einer Seitenansicht. Die Verriegelungsvorrichtung ist seitlich an der Schaltvorrichtung 12 angeschraubt, wobei in der Figur 7 der Kniehebel in gestreckter Position und in der Figur 8 der Kniehebel in abgeknickter Position gezeigt ist. In beiden Figuren ist zusätzlich ein Schraubendreher 11 dargestellt, der in die Hülse 10 am Hebelarm des Kniehebels eingesteckt ist und damit die Position des Kniehebels manipulieren kann.

Die erfindungsgemäße Verriegelungsvorrichtung der Parksperre weist also aufgrund der vorteilhaften Bauweise auch bei unterschiedlichen Umgebungsbedingungen nur geringe Reibung auf und erfordert nur geringe Kräfte zum Lösen. Außerdem sind die Anforderung an die Maßgenauigkeit der Bauteile nicht so hoch, wie bei anderen bekannten Systemen, da im Umfeld der gestreckten Lage des Kniehebels jeweils nur geringe Kräfte zum Zusammenbrechen des Systems notwendig sind. Der auslösende Aktuator, der Elektromagnet, benötigt nur geringe Kräfte. Die gezeigten Randbedingungen verringern daher die Produktionskosten für die Verriegelungsvorrichtung entsprechend.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

### Bezugszeichenliste

- 1: Verriegelungsvorrichtung
- 2: Stellglied / Bowdenzug
- 2.1: erster Anschlag
- 2.2: zweiter Anschlag
- 3: Kniegelenk
- 3.1: gebundener Hebelarm
- 3.2: freier Hebelarm
- 3.3: freie Ende des Hebelarms
- 4: fester Gegenhalter
- 5: Gleitlager
- 6: Überhubfeder
- 7: Schenkelfeder
- 8: Elektromagnet
- 8.1: Stößel
- 9: Führung
- 10: Hülse
- 11: Schraubendreher
- 12: Schaltvorrichtung

## Patentansprüche

1. Parksperrensystem für ein Automatikgetriebe eines Kraftfahrzeuges, wobei das Automatikgetriebe einen Aktuator aufweist, welcher ein Sperrelement im Automatikgetriebe auslegen kann, das Sperrelement durch Federkraft in verriegelter Stellung gehalten wird, und eine Verriegelungsvorrichtung (1) vorgesehen ist, die über ein Stellglied (2) mit dem Sperrelement verbunden ist und einen Kniehebel (3) aufweist, welcher das Stellglied (2) derart fixieren kann, dass ein Einlegen des Sperrelementes im Automatikgetriebe verhindert werden kann, **dadurch gekennzeichnet, dass** das Stellglied (2) federbelastet mit einem Ende des Kniehebels (3) derart verbunden ist, dass das Stellglied (2) in einem Gleitlager (5) an einem Ende des Kniehebels (3) federbelastet über einen gewissen Toleranzweg hinweg entlang des Endes des Kniehebels (3) bewegbar ist, wobei zu beiden Seiten des vorbestimmten Toleranzweges ein fester Anschlag (2.1, 2.2) vorgesehen ist und wobei zwischen dem ersten festen Anschlag (2.1) am Stellglied (2) und dem Gleitlager (5) auf einer Seite des Stellgliedes (2) ein erstes Federelement (6) angeordnet ist, und auf der anderen Seite des Gleitlagers (5) am Stellglied (2) der zweite feste Anschlag (2.2) angeordnet ist.

2. Parksperrensystem gemäß Anspruch 1, **dadurch gekennzeichnet, dass** der Kniehebel (3) in einem überstreckten Zustand das Stellglied (2) fixiert, wobei ein fester Gegenhalter (4) auf der überstreckten Seite des Kniehebels (3) angebracht ist.

3. Parksperrensystem gemäß Anspruch 1 oder 2, **dadurch gekennzeichnet, dass** an dem Kniehebel (3) ein zweites Federelement (7) angreift, dessen Federkraft in Richtung Überstreckung des Kniehebels (3) wirkt.

4. Parksperrensystem gemäß dem voranstehenden Patentanspruch 3,
**dadurch gekennzeichnet, dass** das zweite Federelement (7) an der mittleren Achse (3.5) zwischen zwei Hebelarmen (3.1, 3.2) des Kniehebels (3) angeordnet ist.

5. Parksperrensystem gemäß einem der voranstehenden Patentansprüche 2 bis 4, **dadurch gekennzeichnet, dass** ein fembetätigbarer Aktuator (8) vorgesehen ist, welcher am Kniehebel (3) angreifen kann und diesen aus der überstreckten und fixierten Lage in eine bewegliche Lage überführen kann.

6. Parksperrensystem gemäß dem voranstehenden Patentanspruch 5,
**dadurch gekennzeichnet, dass** der fernbetätigbare Aktuator ein Elektromagnet (8) mit einem Stößel (8.1) ist.

7. Parksperrensystem gemäß dem voranstehenden Patentanspruch 5,
**dadurch gekennzeichnet, dass** der fernbetätigbare Aktuator (8) ein Elektromagnet ist, der gegen einen am Kniehebel (3) befestigten Permanentmagneten wirkt.

8. Parksperrensystem gemäß einem der voranstehenden Patentansprüche 1 bis 7, **dadurch gekennzeichnet, dass** das Stellglied (2) ein Bowdenzug ist.

9. Parksperrensystem gemäß einem der voranstehenden Patentansprüche 1 bis 7, **dadurch gekennzeichnet, dass** das Stellglied (2) ein Gestänge ist.

10. Parksperrensystem gemäß einem der voranstehenden Patentansprüche 1 bis 9, **dadurch gekennzeichnet, dass** das Ende des Kniehebels (3), an dem das Stellglied (2) angreift, in einer Führung (9) gelagert ist.

11. Parksperrensystem gemäß einem der voranstehenden Patentansprüche 1 bis 10, **dadurch gekennzeichnet, dass** an einem der Hebelarme (3.1, 3.2) des Kniehebels (3) ein Angriffspunkt (10) für ein Werkzeug (11) vorgesehen ist, womit der Kniehebel (3) manuell aus der Überstreckungslage gebracht werden kann.

12. Parksperrensystem gemäß dem voranstehenden Patentanspruch 11,
**dadurch gekennzeichnet, dass** der Angriffspunkt (10) für das Werkzeug (11) eine Einsteckhülse ist, in die das Werkzeug (11), vorzugsweise ein Schraubendreher, eingesteckt werden kann.

13. Parksperrensystem gemäß einem der voranstehenden Patentansprüche 1 bis 12, **dadurch gekennzeichnet, dass** die Verriegelungsvorrichtung (1) unmittelbar an einer Schaltvorrichtung (12) befestigt ist.

14. Schaltvorrichtung für ein Automatikgetriebe, **dadurch gekennzeichnet, dass** es ein Parksperrensystem gemäß einem der voranstehenden Patentansprüche 1 bis 12 aufweist.

15. Automatikgetriebe, **dadurch gekennzeichnet, dass** es ein Parksperrensystem gemäß einem der voranstehenden Patentansprüche 1 bis 12 aufweist.

## Claims

1. Parking lock system for an automatic transmission of a motor vehicle, wherein the automatic transmission has an actuator which can disengage a blocking element in the automatic transmission, the blocking element is held in the locked position by spring force, and a locking device (1) is provided which is connected to the blocking element via a control element (2) and which has a knee lever (3) which can fix the control element (2) in such a way that an engagement of the blocking element in the automatic transmission can be prevented, **characterized in that** the control element (2) is connected in spring-loaded fashion to one end of the knee lever (3) in such a way that the control element (2) can be moved, in a plain bearing (5) on one end of the knee lever (3), in spring-loaded fashion over a certain tolerance path along the end of the knee lever (3), wherein to both sides of the predetermined tolerance path there is provided a fixed stop (2.1, 2.2) and wherein between the first fixed stop (2.1) on the control element (2) and the plain bearing (5) there is arranged, on one side of the control element (2), a first spring element (6), and the second fixed stop (2.2) is arranged on the control element (2) on the other side of the plain bearing (5).

2. Parking lock system according to Claim 1, **characterized in that** the knee lever (3), in an over-extended state, fixes the control element (2), wherein a fixed counter support (4) is mounted on the over-extended side of the knee lever (3).

3. Parking lock system according to Claim 1 or 2, **characterized in that** a second spring element (7) engages on the knee lever (3), the spring force of which second spring element acts in the direction of over-extension of the knee lever (3).

4. Parking lock system according to the preceding Patent Claim 3, **characterized in that** the second spring element (7) is arranged on the central axis (3.5) between two lever arms (3.1, 3.2) of the knee lever (3).

5. Parking lock system according to one of the preceding Patent Claims 2 to 4, **characterized in that** a remote-operable actuator (8) is provided which can engage on the knee lever (3) and move the latter from the over-extended and fixed position into a movable position.

6. Parking lock system according to the preceding Patent Claim 5, **characterized in that** the remote-operable actuator is an electromagnet (8) with a plunger (8.1).

7. Parking lock system according to the preceding Patent Claim 5, **characterized in that** the remote-operable actuator (8) is an electromagnet which acts counter to a permanent magnet fastened to the knee lever (3).

8. Parking lock system according to one of the preceding Patent Claims 1 to 7, **characterized in that** the control element (2) is a Bowden cable.

9. Parking lock system according to one of the preceding Patent Claims 1 to 7, **characterized in that** the control element (2) is a linkage.

10. Parking lock system according to one of the preceding Patent Claims 1 to 9, **characterized in that** that end of the knee lever (3) on which the control element (2) engages is mounted in a guide (9).

11. Parking lock system according to one of the preceding Patent Claims 1 to 10, **characterized in that** an engagement point (10) for a tool (11) is provided on one of the lever arms (3.1, 3.2) of the knee lever (3), by means of which tool the knee lever (3) can be moved manually out of the over-extended position.

12. Parking lock system according to the preceding Patent Claim 11, **characterized in that** the engagement point (10) for the tool (11) is a plugin sleeve into which the tool (11), preferably a screwdriver, can be inserted.

13. Parking lock system according to one of the preceding Patent Claims 1 to 12, **characterized in that** the locking device (1) is fastened directly to a shift device (12).

14. Shift device for an automatic transmission, **characterized in that** it has a parking lock system according to one of the preceding Patent Claims 1 to 12.

15. Automatic transmission, **characterized in that** it has a parking lock system according to one of the preceding Patent Claims 1 to 12.

## Revendications

1. Système de blocage de stationnement pour une transmission automatique d'un véhicule automobile, dans lequel la transmission automatique présente un actionneur qui peut désenclencher un élément de blocage dans la transmission automatique, l'élément de blocage est maintenu par une force de ressort dans la position verrouillée et un dispositif de verrouillage (1) est prévu, lequel est relié par le biais d'un organe de commande (2) à l'élément de blocage et présente une genouillère (3) qui peut fixer l'organe de commande (2) de telle sorte qu'un enclenchement de l'élément de blocage dans la transmission automatique puisse être empêché,
**caractérisé en ce que** l'organe de commande (2) est relié de manière sollicitée par ressort à une extrémité de la genouillère (3) de telle sorte que l'organe de commande (2) puisse être déplacé dans un palier lisse (5) à une extrémité de la genouillère (3) de manière sollicitée par ressort sur une certaine course de tolérance le long de l'extrémité de la genouillère (3), une butée fixe (2.1, 2.2) étant prévue des deux côtés de la course de tolérance prédéterminée et un premier élément de ressort (6) étant disposé entre la première butée fixe (2.1) sur l'organe de commande (2) et le palier lisse (5) sur un côté de l'organe de commande (2), et la deuxième butée fixe (2.2) étant disposée de l'autre côté du palier lisse (5) sur l'organe de commande (2).

2. Système de blocage de stationnement selon la revendication 1, **caractérisé en ce que** la genouillère (3) fixe l'organe de commande (2) dans un état sur-étiré, un élément de contre-butée fixe (4) étant monté sur le côté sur-étiré de la genouillère (3).

3. Système de blocage de stationnement selon la revendication 1 ou 2, **caractérisé en ce qu'**un deuxième élément de ressort (7) agit sur la genouillère (3), sa force de ressort agissant dans la direction du sur-étirement de la genouillère (3).

4. Système de blocage de stationnement selon la revendication précédente 3, **caractérisé en ce que** le deuxième élément de ressort (7) est disposé sur l'axe médian (3.5) entre deux bras de levier (3.1, 3.2) de la genouillère (3).

5. Système de blocage de stationnement selon l'une quelconque des revendications précédentes 2 à 4, **caractérisé en ce qu'**un actionneur (8) commandé à distance est prévu, lequel peut agir sur la genouillère (3) et peut la transférer de la position sur-étirée et fixée dans une position mobile.

6. Système de blocage de stationnement selon la revendication précédente 5, **caractérisé en ce que** l'actionneur commandé à distance est un électroaimant (8) avec une tige poussoir (8.1).

7. Système de blocage de stationnement selon la revendication précédente 5, **caractérisé en ce que** l'actionneur (8) commandé à distance est un électroaimant, qui agit à l'encontre d'un aimant permanent fixé sur la genouillère (3).

8. Système de blocage de stationnement selon l'une quelconque des revendications précédentes 1 à 7, **caractérisé en ce que** l'organe de commande (2) est un câble Bowden.

9. Système de blocage de stationnement selon l'une quelconque des revendications précédentes 1 à 7, **caractérisé en ce que** l'organe de commande (2) est une tringle.

10. Système de blocage de stationnement selon l'une quelconque des revendications précédentes 1 à 9, **caractérisé en ce que** l'extrémité de la genouillère (3) sur laquelle agit l'organe de commande (2), est montée dans une coulisse (9).

11. Système de blocage de stationnement selon l'une quelconque des revendications précédentes 1 à 10, **caractérisé en ce qu'**un point d'action (10) pour un outil (11) est prévu sur l'un des bras de levier (3.1, 3.2) de la genouillère (3), avec lequel la genouillère (3) peut être amenée manuellement hors de la position de sur-étirement.

12. Système de blocage de stationnement selon la revendication précédente 11, **caractérisé en ce que** le point d'action (10) pour l'outil (11) est une douille d'enfichage dans laquelle l'outil (11), de préférence un tournevis, peut être enfiché.

13. Système de blocage de stationnement selon l'une quelconque des revendications précédentes 1 à 12, **caractérisé en ce que** le dispositif de verrouillage (1) est fixé directement sur un dispositif de commutation (12).

14. Dispositif de commutation pour une transmission automatique, **caractérisé en ce qu'**il présente un système de blocage de stationnement selon l'une quelconque des revendications précédentes 1 à 12.

15. Transmission automatique, **caractérisée en ce qu'**elle présente un système de blocage de stationnement selon l'une quelconque des revendications précédentes 1 à 12.
